# EUROPÄISCHE PATENTSCHRIFT

(11) **EP 0 941 571 B1**
(45) Veröffentlichungstag und Bekanntmachung des Hinweises auf die Patenterteilung: **16.05.2001**
(21) Anmeldenummer: 97949930.8
(22) Anmeldetag: 14.11.1997
(51) Int. Cl.: H02M 3/28, H02M 3/335

(54) **SCHALTNETZTEIL MIT REGELUNG DER AUSGANGSSPANNUNG**
SWITCHING MODE POWER SUPPLY UNIT WITH A REGULATION OF THE OUTPUT VOLTAGE
UNITE D'ALIMENTATION A MODE DE COMMUTATION ET A REGULATION DE LA TENSION DE SORTIE

(30) Priorität: 28.11.1996 DE 19649403
(43) Veröffentlichungstag der Anmeldung: 15.09.1999
(73) Patentinhaber: Infineon Technologies AG, 81669 München (DE)
(72) Erfinder: PRELLER, Peter, D-81243 München (DE)
(74) Vertreter: Zedlitz, Peter, Dipl.-Inf.
(86) Internationale Anmeldenummer: DE9702680
(87) Internationale Veröffentlichungsnummer: WO9824171

(56) Entgegenhaltungen:
- EP-A- 0 653 831
- EP-A- 0 778 659
- DE-A- 3 501 052

## Beschreibung

Die Erfindung betrifft ein Schaltnetzteil nach dem Oberbegriff des Patentanspruchs 1.

Schaltnetzteile werden bekanntlich verwendet, um aus einer gleichgerichteten Netzwechselspannung eine oder mehrere unterschiedliche Ausgangsgleichspannungen lastunabhängig zu erzeugen. Hierzu wird die primärseitige gleichgerichtete Wechselspannung über ein Schaltelement taktweise an die Primärwicklung eines Transformators gelegt. An der Sekundärwicklung ist nach Gleichrichtung und Glättung die Ausgangsspannung abgreifbar.

Die Ausgangsspannung wird durch die Taktsteuerung des Schaltelements geregelt. In der DE-A-44 07 709 wird hierzu an einer weiteren Primärwicklung ein Regelsignal abgegriffen, in Abhängigkeit dessen die Taktfrequenz und somit die sekundärseitige Ausgangsspannung geregelt werden. Problematisch ist die nur ungenügende Kopplung zwischen primärseitiger Regelwicklung und sekundärseitiger Lastwicklung. Dies führt dazu, daß bei Lastwechseln die Ausgangsspannung nicht im erforderlichen Maße konstant gehalten werden kann.

Bei der im oben genannten Dokument gezeigten Schaltung ist eine sogenannte Strompumpe für sinusförmige Stromaufnahme vorgesehen. Durch die Strompumpe werden Einflüsse der Netzfrequenz verstärkt. Die Ausgangsspannung ist deshalb mit einem Netzbrummanteil überlagert, der wegen des primärseitigen Abgriffs der Regelspannung nicht vollständig ausgeregelt wird.

Zur Abhilfe kann die Regelspannung sekundärseitig abgegriffen werden, wie beispielsweise im deutschen Gebrauchsmuster G 94 10 995 gezeigt. Zur Übertragung des Regelsignals auf die primärseitig angeordnete Steuerungseinrichtung ist ein Optokoppler erforderlich. Ein Optokoppler-Bauelement ist jedoch relativ teuer. Diese Lösung ist demnach unwirtschaftlich.

Die Aufgabe der Erfindung besteht darin, ein Schaltnetzteil der eingangs genannten Art anzugeben, das eine möglichst gute geregelte Ausgangsspannung bei geringeren Herstellungskosten erzeugt.

Erfindungsgemäß wird diese Aufgabe durch ein Schaltnetzteil nach den Merkmalen des Patentanspruchs 1 gelöst.

Beim erfindungsgemäßen Schaltnetzteil wird ein Optokoppler gespart. Die Übertragung der Regelinformation von der Sekundär- auf die Primärseite erfolgt durch eine unsymmetrische Verlagerung des Magnetfelds des Transformators zwischen den Außenschenkeln des Transformatorkerns. Die Ableitung des Regelsignals setzt direkt an der zu regelnden Ausgangsspannung an, so daß auch Lastwechsel und der Netzbrumm gut ausgeregelt werden. Die auf den Außenschenkeln anzubringenden Wicklungen sind im allgemeinen einfach und automatisiert herstellbar und somit kostengünstig.

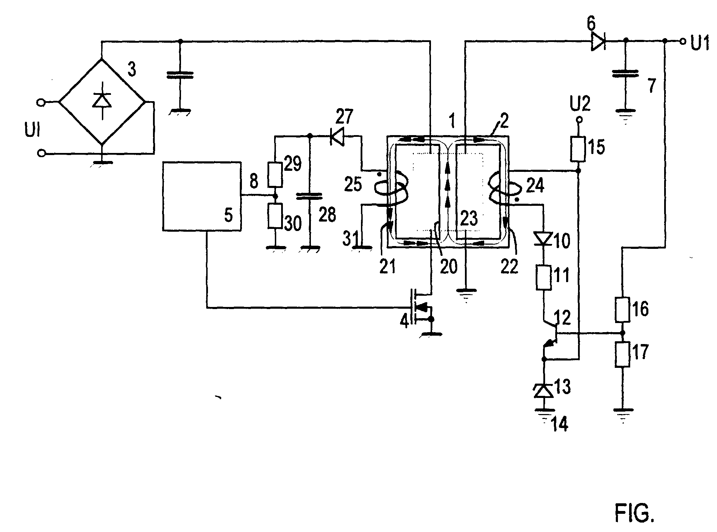

Nachfolgend wird die Erfindung anhand des in der Zeichnung dargestellten Ausführungsbeispiels näher erläutert. In der Figur ist ein Schaltnetzteil gezeigt, das aus einer eingangsseitigen Netzwechselspannung UI ausgangsseitig eine geregelte Ausgangsspannung U1 erzeugt. Das Schaltnetzteil enthält einen Transformator 1 mit einem E-förmigen Transformatorkern 2, um dessen mittleren Schenkel 20 herum Primär- und Sekundärwicklungen 23 angeordnet sind. Der Mittelschenkel enthält zweckmäßigerweise einen quer zur Schenkellängsrichtung ausgerichteten Luftspalt. Der Primärwicklung wird die über einen Brükkengleichrichter 3 gleichgerichtete Netzwechselspannung mittels eines Schalttransistors 4 taktweise zugeführt. Der Schalttransistor 4 wird von einer Steuerungseinrichtung 5 zur Steuerung seiner Ein- und Ausschaltphasen angesteuert. An die Sekundärwicklung sind eine Gleichrichterdiode 6 sowie ein Glättungskondensator 7 angeschlossen, an dem die Ausgangsgleichspannung U1 anliegt. Damit die Ausgangsspannung U1 lastunabhängig möglichst konstant ausgeregelt wird, wird der Steuerungseinrichtung 5 an einem Anschluß 8 ein Regelsignal zugeführt. Davon abhängig erfolgt die Taktsteuerung des Schalttransistors 4. Bei Schaltnetzteilen nach dem freischwingenden Prinzip wird durch das Regelsignal die Einschaltdauer des Schaltransistors 4 festgelegt, die Ausschaltdauer wird durch den Entmagnetisierungszustand des Transformators bestimmt. Bei festfrequentem Betrieb wird durch das Regelsignal das Tastverhältnis des Einschalttaktes festgelegt.

Das Regelsignal am Anschluß 8 der Steuerungseinrichtung 5 wird sekundärseitig abgegriffen und über den Transformator 1 auf die Primärseite übertragen. Hierzu ist eine Wicklung 24 vorgesehen, die um einen Außenschenkel 22 des E-förmigen Transformatorkerns gewickelt ist. Die Wicklung 24 ist auf der Sekundärseite angeschlossen. Um den anderen Außenschenkel 21 des E-förmigen Transformatorkerns ist eine Wicklung 25 angeordnet. Diese ist primärseitig zur Auskopplung des Regelsignals angeschlossen. Regelinformation wird von der Primär- auf die Sekundärseite übertragen, indem der Strom durch die Wicklung 24 sekundärseitig moduliert wird, wodurch das Magnetfeld in entsprechender Weise unsymmetrisch zwischen den Außenschenkeln 21, 22, des Transformators verlagert wird und somit ein entsprechend moduliertes Spannungssignal an der Wicklung 25 primärseitig abgegriffen wird. Durch den Luftspalt im Mittelschenkel des Transformators wird dessen magnetischer Widerstand erhöht und die Verlagerung des Magnetfelds begünstigt.

Die Anschlüsse der sekundärseitigen Wicklung 24 sind über eine Diode 10, einen Strombegrenzungswiderstand 11 sowie die Kollektor-Emitter-Strecke eines Bipolartransistors 12 miteinander zu einem Stromkreis verbunden. Anstelle eines Bipolartransistors kann auch ein MOS-Transistor verwendet werden. Der Emitter des Transistors 12 (bzw. der Sourceanschluß eines entsprechenden MOS-Transistors) ist über eine Zenerdiode 13 mit einem Sekundärmasseanschluß 14 verbunden und über einen Widerstand 15 mit einem Anschluß für eine weitere, sekundärseitig erzeugte Spannung U2. Der Basisanschluß des Transistors 12 wird über einen Spannungsteiler 16, 17 von der zu regelnden Ausgangsspannung U1 angesteuert. Wenn das von der Ausgangsspannung U1 über den Spannungsteiler 16, 17 abgeleitete Signal die von der Zenerdiode 13 und des Transistors 12 gebildete Schwellenspannung übersteigt, wird die Wicklung 24 über die Elemente 10, 11, 12 kurzgeschlossen. Zur Arbeitspunkteinstellung der Zenerdiode 13 wird dieser über den Widerstand 15 ein Strom aus der Spannung U2 zugeführt. Bei Anwendung des Schaltnetzteils in einem Fernsehgerät ist die Spannung U2 eine niedrige, ansonsten noch zur Versorgung von Signalverarbeitungsschaltungen geeignete Spannung, die bei etwa 10 Volt liegt. Die Spannung U1 ist die üblicherweise zur Ansteuerung der Zeilenendstufe für die Bildröhre vorgesehene Spannung in der Größenordnung von 120...150 Volt.

Ohne Berücksichtigung der Wicklungen 24, 25 um die Seitenschenkel des Transformatorkerns verteilt sich das durch die Primärwicklung um den Mittelschenkel erzeugte Magnetfeld im Kern symmetrisch auf die beiden Seitenschenkel 21 und 22. Das Kurzschließen der Wicklung 24 über die Elemente 10, 11, 12 bewirkt, daß das durch die Primärwicklung um den Mittelschenkel 20 erzeugte Magnetfeld unsymmetrisch auf die Seitenschenkel 22, 21 aufgeteilt wird. Im Ausführungsbeispiel ist die Wicklung 24 derart orientiert, daß das Magnetfeld im zugeordneten Schenkel 22 des Transformatorkerns verringert wird. Der am Wicklungsende dargestellte Punkt deutet an, daß während der Sperrphase des Schalttransistors dort der positive Pol der an der Wicklung 24 induzierten Spannung vorliegt. Durch den in der Wicklung 24 induzierten Strom wird das durch den Schenkel 22 gerichtete Magnetfeld verringert und anstelle dessen in den Schenkel 21 verlagert.

Die in der Wicklung 25 induzierte Spannung wird dadurch erhöht. Diese wird an einem Anschluß der Wicklung 25 über eine Gleichrichterdiode 27 und einen Glättungskondensator 28 ausgekoppelt und über einen Spannungsteiler 29, 30 dem Anschluß 8 der Steuerungseinrichtung 5 für das Regelsignal zugeführt. Der andere Anschluß der Wicklung 25 ist mit Primärmasse 31 verbunden. Die Wicklung 25 ist derart orientiert, daß an deren gleichrichterseitigem Anschluß während der Sperrphase des Schalttransistors 4 der positive Pol der induzierten Spannung anliegt, was durch einen Punkt markiert ist.

Während bei der Wicklung 24 während der Sperrphase der positive Spannungspol an dem dem Sekundärmasseanschluß zugewandten Wicklungsanschluß entsteht, entsteht der positive Spannungspol bei der Wicklung 25 am vom Primärmasseanschluß abgewandten Wicklungsanschluß. Die Wicklungen 24, 25 weisen gegensinnige Wicklungsorientierung auf.

Die Anzahl der Windungen der Wicklung 24 hängt vom Stromerfordernis ab, welches zum Betreiben der daran angeschlossenen Schaltungselemente erforderlich ist sowie von dem Maß, welches für die Verlagerung des Magnetfelds in den Seitenschenkeln gewünscht ist. Es hat sich gezeigt, daß mit zunehmender Windungsanzahl der Strom durch die Wicklung 24 abnimmt und die Wicklung hochohmiger wird, wobei die Wirkung der Magnetfeldverlagerung zunimmt. Die Anzahl der Wicklungen der Windung 25 hängt von der für die weitere Verarbeitung erforderlichen Höhe des Regelsignals ab.

Während der Anlaufphase des Schaltnetzteils ist die Spannung U1 niedriger als die durch die Zenerdiode 13 in Zusammenwirken mit der Basis-Emitter-Strecke des Transistors 12 eingestellten Schwellspannung. Der Transistor 12 ist gesperrt, durch die Wicklung 24 fließt kein Strom. Das Magnetfeld im Transformator ist symmetrisch auf die beiden Seitenschenkel 21, 22 verteilt. An der Wicklung 25 wird eine niedrige Spannung erzeugt, so daß die Steuerungseinrichtung 5 veranlaßt wird, den Schalttransistor 4 derart taktzusteuern, daß die Ausgangsspannung U1 zunimmt. Liegt die Ausgangsspannung U1 über den durch den Transistor 12 und die Zenerdiode 13 gebildeten Schwellwert, wird die Wicklung 24 über die Elemente 10, 11, 12 kurzgeschlossen, so daß im Schenkel 21 des Transformatorkerns ein höheres Magnetfeld entsteht als im Schenkel 22 und in entsprechender Weise in der Wicklung 25 eine höhere Spannung induziert wird. Dies bedeutet für das Regelsignal am Anschluß 8 der Steuerungseinrichtung 5, daß der Transistor 4 derart taktgesteuert wird, daß die Spannung U1 wieder abnimmt, bis die Spannung U1 unter die durch den Transistor 12 und die Zenerdiode 13 gebildete Schaltschwelle fällt. Der Einschwingvorgang wird solange fortgesetzt, bis das über den Widerstandsteiler 16, 17 aus der Spannung U1 abgeleitete Signal bei der durch Transistor 12 und Zenerdiode 13 gebildeten Schaltschwelle liegt. Der Transistor 12 ist dann mäßig leitend geschaltet, d. h. weniger leitend als bei voll durchgeschaltetem Zustand und mehr leitend als bei gesperrtem Zustand. In der Windung 25 wird dann eine solche Regelspannung induziert, die ausreicht, diesen Zustand beizubehalten. Die Ausgangsspannung U1 ist konstant ausgeregelt. Die Spannungsregelung ist somit eingeschwungen.

Das Regelsignal wird nur während der Sperrphase des Schalttransistors 4 von der Sekundär- auf die Primärseite übertragen. Zusätzlich bietet sich eine Signalübertragung während der Flußphase an, während der der Schalttransistor 4 leitend geschaltet ist. Dann ist eine Übertragung von Information von der Primär- auf die Sekundärseite unter Verwendung der gleichen Wicklungen 25, 24 zweckmäßig, die auf der Primärseite an der Wicklung 25 mit entsprechenden Schaltungen wie für die Wicklung 24 vorgesehen eingekoppelt wird und an der Wicklung 24 auf der Sekundärseite ausgekoppelt wird. Zur Informationsübertragung eignet sich beispielsweise ein Fernsteuersignal, das von einem primärseitigen Infrarotdetektor- und Empfänger empfangen wird und von einem sekundärseitig mit Spannung versorgten Befehlsdecoder ausgewertet wird.

## Patentansprüche

1. Schaltnetzteil mit einem Schaltelement (4), durch das eine gleichgerichtete Wechselspannung (UI) taktweise an eine Primärwicklung eines Transformators (1) anlegbar ist, an dessen Sekundärwicklung eine gleichgerichtete zu regelnde Ausgangsspannung (U1) abgreifbar ist, und mit einer Steuereinrichtung (5), durch die das Schaltelement (4) in Abhängigkeit von einem Regelsignal taktsteuerbar ist, wobei der Transformator (1) einen E-förmigen Kern (2) enthält, dessen mittlerer Schenkel (20) von der Primär- und der Sekundärwicklung (23) umgeben ist,
**dadurch gekennzeichnet**, daß
eine einen Außenschenkel (22) des E-förmigen Kerns (2) umgebende erste Wicklung (24) vorgesehen ist, die von einem in Abhängigkeit von der Ausgangsspannung (U1) steuerbaren Strom durchfließbar ist, und daß mindestens eine weitere einen anderen Außenschenkel (21) des E-förmigen Kerns (2) umgebende zweite Wicklung (25) vorgesehen ist, von der das Regelsignal ableitbar ist.

2. Schaltnetzteil nach Anspruch 1,
**gekennzeichnet durch**
einen sekundärseitigen Strompfad, der die erste Wicklung (24) sowie einen Transistor (12) enthält, der von der zu regelnden Ausgangsspannung (U1) ansteuerbar ist.

3. Schaltnetzteil nach Anspruch 2,
**dadurch gekennzeichnet**, daß
die Anschlüsse der ersten Wicklung (24) über eine Diode (10), einen Widerstand (11) und den Hauptstrompfad eines Transistors (12) miteinander verbunden sind, daß der Emitter oder Sourceanschluß des Transistors (12) über eine Zenerdiode (13) mit Sekundärmasse (14) und über einen Widerstand (15) mit einer sekundärseitig erzeugbaren Gleichspannung (U2) gekoppelt ist und daß der Transistor (12) über einen Spannungsteiler (16, 17) von der zu regelnden Spannung (U1) gesteuert wird.

4. Schaltnetzteil nach einem der Ansprüche 1 bis 3,
**dadurch gekennzeichnet**, daß
die zweite Wicklung (25) an einem Ende mit Primärmasse (31) gekoppelt ist und an einem anderen Ende an ein Mittel zur Gleichrichtung (27) und Glättung (28), an dem das Regelsignal abgreifbar ist.

5. Schaltnetzteil nach einem der Ansprüche 1 bis 4,
**dadurch gekennzeichnet**, daß
der Wicklungssinn der ersten und zweiten Wicklungen (24, 25) entgegengesetzt orientiert ist.

6. Schaltnetzteil nach einem der Ansprüche 1 bis 5,
**dadurch gekennzeichnet**, daß
der mittlere Schenkel (20) des Transformators (1) einen Luftspalt enthält.

## Claims

1. Switched-mode power supply having a switching element (4) by means of which a rectified AC voltage (UI) can be applied in a pulsed manner to a primary winding of a transformer (1) across whose secondary winding a rectified output voltage (U1) which is to be regulated can be tapped off, and having a control device (5) by means of which the switching element (4) can be clock-controlled as a function of a regulation signal, with the transformer (1) containing an E-shaped core (2) whose centre limb (20) is surrounded by the primary winding and the secondary winding (23),
characterized in that
a first winding (24) is provided which surrounds one outer limb (22) of the E-shaped core (2) and through which a current can flow which can be controlled as a function of the output voltage (U1), and in that at least one further second winding (25) is provided, which surrounds another outer limb (21) of the E-shaped core (2) and from which the regulation signal can be derived.

2. Switched-mode power supply according to Claim 1,
characterized by
a current path on the secondary side, which contains the first winding (24) and a transistor (12) which can be actuated by the output voltage (U1) which is to be regulated.

3. Switched-mode power supply according to Claim 2,
characterized in that
the connections of the first winding (24) are connected to one another via a diode (10), a resistor (11) and the main current path of a transistor (12), in that the emitter or source connection of the transistor (12) is coupled via a zener diode (13) to the secondary earth (14) and via a resistor (15) to a DC voltage (U2) which can be produced on the secondary side, and in that the transistor (12) is controlled via a voltage divider (16, 17) by the voltage (U1) which is to be regulated.

4. Switched-mode power supply according to one of Claims 1 to 3,
characterized in that
the secondary winding (25) is coupled at one end to the primary earth (21), and is coupled at the other end to a means for rectification (27) and smoothing (28), across which the regulation signal can be tapped off.

5. Switched-mode power supply according to one of Claims 1 to 4,
characterized in that
the winding sense of the first and second windings (24, 25) is oriented in opposite directions.

6. Switched-mode power supply according to one of Claims 1 to 5,
characterized in that
the centre limb (20) of the transformer (1) contains an air gap.

## Revendications

1. Alimentation à découpage ayant un élément (4) de commutation, par lequel une tension (U1) alternative redressée peut être appliquée en cadence à un enroulement primaire d'un transformateur (1) sur l'enroulement secondaire duquel peut être prélevée une tension (U1) de sortie redressée à réguler et un dispositif (5) de commande par lequel l'élément (4) de commutation peut être commandé en cadence en fonction d'un signal de régulation, le transformateur (1) comportant un noyau (2) en forme de E dont la branche (20) médiane est entourée de l'enroulement (23) primaire et de l'enroulement secondaire,
caractérisée en ce qu'il est prévu un premier enroulement (24) entourant une branche (22) extérieure du noyau (2) en forme de E et dans lequel peut passer un courant pouvant être commandé en fonction de la tension (U1) de sortie et en ce qu'il est prévu un deuxième enroulement (25) supplémentaire entourant une autre branche (21) extérieure du noyau (2) en forme de E et duquel peut être dérivé le signal de régulation.

2. Alimentation à découpage suivant la revendication 1, caractérisée par un trajet de courant du côté secondaire qui comporte le premier enroulement (24), ainsi qu'un transistor (12) qui peut être commandé par la tension (U1) de sortie à réguler.

3. Alimentation à découpage suivant la revendication 2, caractérisée en ce que les bornes du premier enroulement (24) sont reliées entre elles par une diode (10), une résistance (11) et le trajet principal de courant d'un transistor (12), en ce que l'émetteur ou la borne de source du transistor (12) est couplé par l'intermédiaire d'une diode (13) zener à une masse (14) secondaire et par l'intermédiaire d'une résistance (15) à une tension (U2) continue pouvant être produite du côté secondaire et en ce que le transistor (12) est commandé par l'intermédiaire d'un diviseur (16, 17) de tension par la tension (U1) à réguler.

4. Alimentation à découpage suivant l'une des revendications 1 à 3, caractérisée en ce que le deuxième enroulement (25) est couplé à une extrémité à une masse (31) primaire et à une autre extrémité à un moyen de redressement (27) et de lissage (28) sur lequel le signal de régulation peut être prélevé.

5. Alimentation à découpage suivant l'une des revendications 1 à 4, caractérisée en ce que les sens d'enroulement des premier et deuxième enroulements (24, 25) sont opposés.

6. Alimentation à découpage suivant l'une des revendications 1 à 5, caractérisée en ce que la branche (20) médiane du transformateur (1) comporte un entrefer.
